# EUROPEAN PATENT SPECIFICATION

(11) **EP 3 962 798 B1**
(45) Date of publication and mention of the grant of the patent: **07.06.2023**
(21) Application number: 20723574.8
(22) Date of filing: 27.04.2020
(51) Int. Cl.: B62D 33/06, A47C 17/80

(54) **CRASH BED PLATFORM**
AUFPRALLBETTPLATTFORM
PLATE-FORME À LIT D'IMPACT

(30) Priority: 29.04.2019 NL 2023023
(43) Date of publication of application: 09.03.2022
(73) Proprietor: DAF Trucks N.V., 5643 TW Eindhoven (NL)
(72) Inventor: ROESTENBURG, Adam, 5643 TW Eindhoven (NL)
(74) Representative: V.O.
(86) International application number: PCT/NL2020/050263
(87) International publication number: WO 2020/222638

(56) References cited:
- EP-A1- 1 607 025
- EP-A2- 2 295 289
- JP-U- H0 655 854
- US-A1- 2007 200 392

## Description

### BACKGROUND OF THE INVENTION

The invention relates to vehicles and in particular heavy goods vehicles also known as trucks. Heavy goods vehicles may have one or more beds or bunks installed in the cabin for drivers seeking rest. It is common practice to place these beds behind the front seats - in particular the driver seat - e.g. as described in JPH0655854. From a safety perspective this may be undesirable, since, during a collision of a truck, a truck's cabin may deform and cause the bed to collide. In worst case situation, the bed, in particular a heavy bed platform may impact the occupant seats and even penetrate the seats, which is a big risk for the occupant/driver sitting in it. The bed platform may thus cause, in case of a strong impact due to a collision or forced break manoeuvre, risk of injury to the occupants. The invention aims to reduce the severity and probability of injury due to the bed platform colliding with the occupant seats in the vehicle cabin during a collision.

### SUMMARY OF THE INVENTION

Accordingly, an object of the invention is to prevent injury to drivers and/or passengers of a heavy goods vehicle when a bed platform collides with occupant seats in a vehicle cabin. The invention provides for a bed platform laying transverse to a vehicle behind one or more occupant seats inside the vehicle comprising a central portion and one or more outer portions. The bed platform's central portion aligns with a centre line of the vehicle and the outer portions extend behind the seat in a lateral direction of the vehicle relative to the longitudinal direction of the vehicle. The central portion and/or outer portions have weakened connector portions connecting the central to the vehicle cabin and/or the outer portions. The weakened connector portions align with an inner side surface of the one or more occupant seats. The weakened connector portions allow the central portion to move forward past the occupant seats and the outer portion to remain behind the occupant seats by disconnection and/or deformation of the weakened connector portions from the central portion. Accordingly a substantial mass reduction is achieved of the bed platform that may impact the driver seat.

### BRIEF DESCRIPTION OF THE DRAWINGS

Figure 1 shows a front view of a vehicle cabin with a bed platform.
Figure 2 shows a top view of a vehicle cabin with first embodiment.
Figure 3 shows exemplary embodiments having weakened connector portions;
Figure 4 shows a further embodiment;
Figure 5 shows an embodiment having storage boxes.

### DETAILED DESCRIPTION

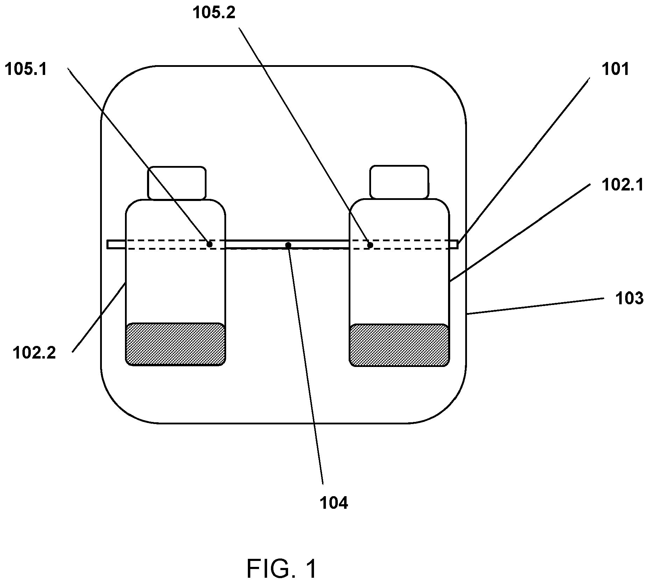

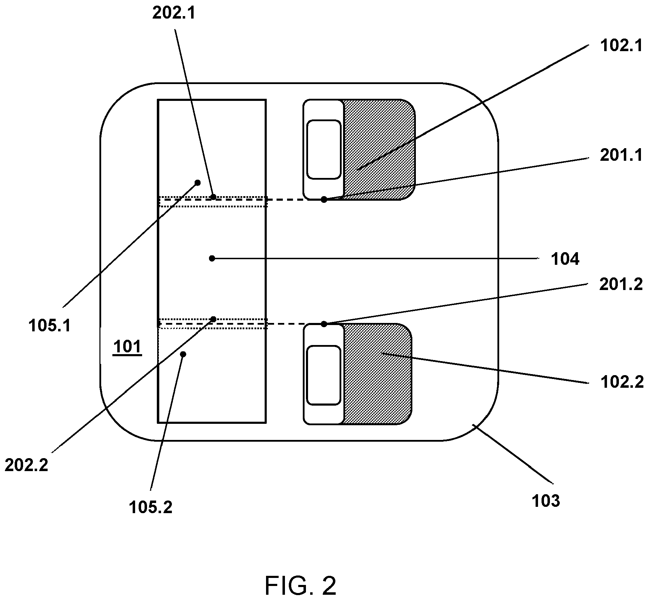

In Figure 1 a front view of a bed platform 101 is shown. The bed platform may be positioned flat with it's length transverse to a longitudinal direction of a vehicle inside the vehicle cabin 103. Such a design is common practice in the design of heavy goods vehicles especially long range heavy goods vehicles. The bed platform is located behind occupant seats 102.1 & 102.2 inside the vehicle and provides a platform for a sleeping location. The bed platform 101 has a central portion 104 and outer portions 105.1 & 105.2. The central portion 104 may be approximately in the centre of the width of the vehicle's cabin 103. It is important that the central portion 104 is not in line with one or more of the occupant seats 102 when viewed from the front of the vehicle. The outer portions 105.1 & 105.2 are the bed platform portions that extend behind the one or more seats 102 in a lateral direction of the vehicle relative to the vehicles longitudinal direction. The outer bed platform portions 105 may be connected to weakened connector portions 202 (shown in Figure 2). The weakened connector portions may disconnect or deform, eg. by buckling, deflecting, collapsing or fracturing which may change a dimension of the weakened connector portion to allow the central portion 104 to move sideways past the occupant seats 102. The extension and mass of the outer portions is lower than the central portions. In the present embodiment the outer portions 105 may buckle, deflect, collapse deform, fracture or equivalent when the bed platform 101 may be pressed against the occupant seats 102 in a longitudinal direction relative to the vehicle, and due to the relative low mass form a limited impact factor to the occupant seat when colliding. The number of the outer portions 105.1 & 105.2 and seats 102.1 & 102.2 are not a determining factor as long as each seat may be associated with the corresponding weakened connector portion of the bed platform. That is to say that if there is only one seat the bed platform may have only one weakened connector portion.

In Figure 2 central portion 104 and outer portions 105.1 & 105.2 are connected by weakened connector portions 202.1 & 202.2. The weakened connector portion 202.1 align in the longitudinal direction of the vehicle with the inner side surface 201.1 of the occupant seat 102.1. Similarly weakened connector portion 202.2 aligns with an inner side surface 201.2 of the occupant seat 102.2. The bed platform 101 may be pressed against the seats 102 when the vehicle collides with another object. The collision may be in any direction of the vehicle and may deform the vehicle cabin 103. The deformation may be due to a vehicle load or freight which may be towed by the vehicle and collides with the vehicle cabin during the collision. The weakened connector portions 202 may allow the central portion 104 to move forward sideways past the occupant seats 102 and the outer portions 105 to remain behind the seats 102 by separation and/or deformation of the outer portions 105 from the central portion 104. The weakened connector portions 202 allow the central portion 104 to move forward past the said occupant seats 102 and the said outer portions 105 to remain behind the said seats 102 by disconnection and/or deformation of weakened connector portions 202 from the central portion. The weakened connector portions 202 may form a boundary between the central portion 104 and the outer portions 105.

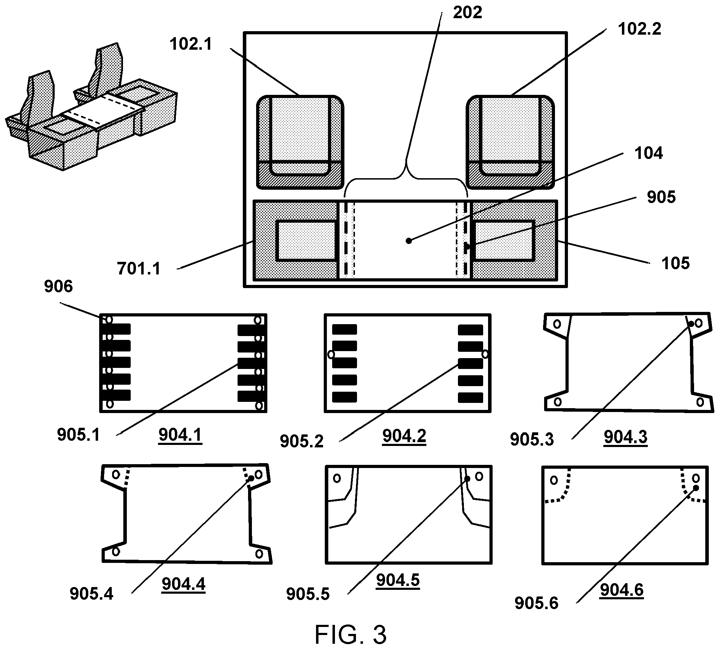

Figure 3 shows a number of variations of a bed platform panels 904.1-904.6 which may be formed by a panel, e.g. of a plastic or organic fiber (wood) product. The depicted panels are rigid and may typically be made from medium density fibre board, plastic or other rigid materials. The portions 905 of the panel 104 may extend past the weakened connector portions 202 and may break away from the central portion 104 of the bed platform 101 due to the weakened connector portions 202. The weakened connector portions 202 may allow the central portion 104 to move forward sideways past the occupant seats 102 and the outer portion 105 to remain behind the seats 102 by separation and/or deformation of the outer portions 105 from the central portion 104. Various weakened forms 905.1-905.6 are possible to form the weakened connector portions 202 which may include slots 905.1, holes 905.2 which may have any shape such as square, round or polygonal, extending portions such as winglets with grooves 905.3, extending portions suck as winglets with perforations 905.4, grooves 905.5 in the 904 panel or perforations 905.6 in the panel 104. The extending portions 905 may break away from the central portion 104 and may have connectors 906 which connect the extending portions 905 to the outer portions 105. The connectors 906 may be latches, locks, hooks or other connectors suitable to connect the extending portions 905 with the outer portions 105.

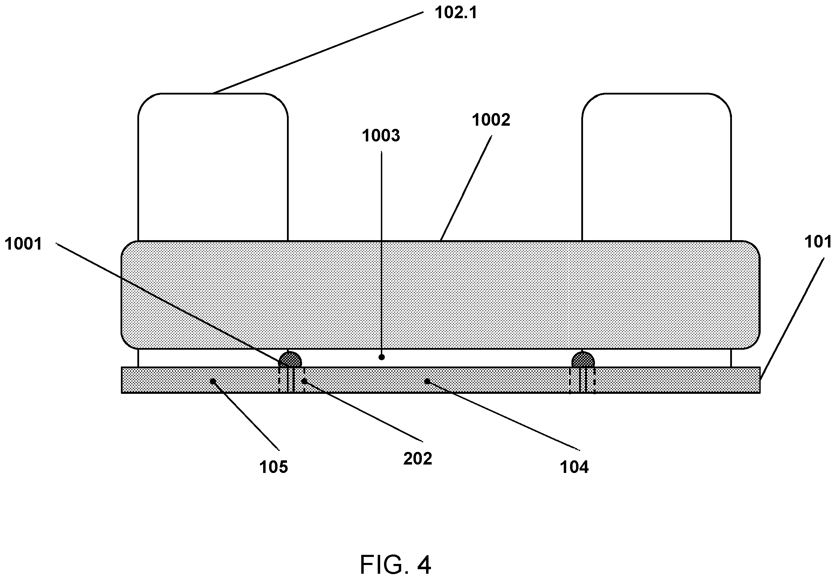

In Figure 4, a bed platform 101 is shown with spacers 1001 at holes that are provided in a weakening pattern. The spacers 1001 are designed to slightly lift the mattress 1002 off of the bed platform 101 and may create a space 1003 for ventilating the mattress 1002. Ventilating helps to maintain the mattress 1002 in a good state.

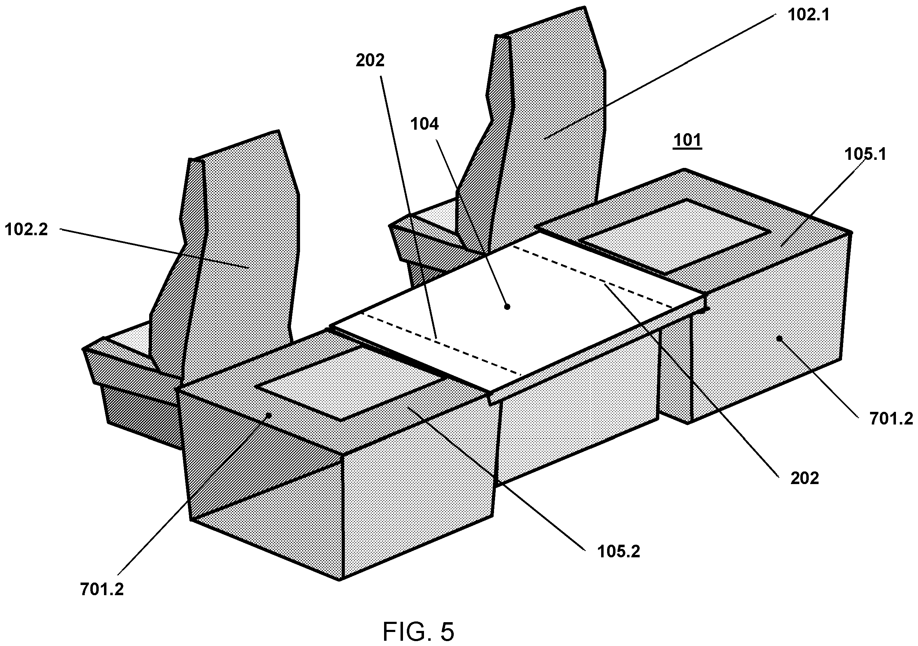

In Figure 5 a bed platform 101 is shown which may have outer portions 105 formed by a cover of a storage container 701. Accordingly, the storage containers 701.1, 701.2 may have one or more top surfaces which at least partially form the outer portions 105 of the bed platform 101 in the same plane as the bed platform 101 top surface. The connector portions 202 may connect the central portion 104 to the top surfaces of the storage elements 701. The storage elements 701 may have a cubic shape but may have other shapes or forms as well which may have a top surface 701 able to form an outer portion 105 of the bed platform 101. The storage elements 701 may be less rigid than the central portion 104 of the bed platform 101 which may cause the storage elements 701 to collapse, buckle, deform or deflect in case of the collision with the vehicle. The top surface of the storage containers 701 may similarly be less rigid than the central portion 104 which may cause the top surface of the storage elements 701 to collapse, buckle, deform or deflect in case of the collision with the vehicle.

## Claims

1. A bed platform (101) laying transverse to a vehicle behind one or more occupant seats (102) inside a vehicle cabin (103), the bed platform comprising a central portion (104) and one or more outer portions (105); wherein the one or more outer portions (105) extend behind the seat (102) in a lateral direction of the vehicle; wherein the central portion (104) has one or more weakened connector portions (202) for connecting the said central portion (104) to the vehicle cabin (103) and/or the one or more outer portions (105); wherein the one or more weakened connector portions (202) align with an inner side surface (201) of the one or more occupant seats (102); wherein the said weakened connector portions (202) allow the central portion (104) to move forward past the said occupant seats (102) and the said outer portions (105) to remain behind the said seats (102) by disconnection and/or deformation of weakened connector portions (202) from the central portion (104).

2. A bed platform (101) according to claim 1, wherein the central portion (104) comprises one or more reinforcement members following the said weakened connector portion (202) in the longitudinal direction of the vehicle; the said reinforcement members assisting in guiding the central portion (104) past the occupant seat (102).

3. A bed platform (101) according to any preceding claim wherein the central portion (104) comprises a panel (904) extending between and/or beyond the weakened connector portion (202) to form a solid bed platform.

4. A bed platform (101) according to claim 3 wherein the weakened connector portions (202) are formed by a pattern of holes (905.2) provided in the panel (904).

5. A bed platform (101) according to claim 4 wherein the said pattern of holes (905.2) contain spacers (1001) which space a mattress (1002) and the panel (904) to form a ventilation space (1003) between the mattress (1002) and the panel (904).

6. A bed platform (101) according to claim 5 wherein the weakened connector portions (202) are formed by extending portions (905) of the central portion (104) comprising connectors (906) for connecting the extending portions (905) to the outer portions (105).

7. A bed platform (101) according to any preceding claim wherein the weakened connector portions (202) comprise breakable connectors (906) constructed to break away from the outer portions (105) during the collision of the vehicle.

8. A bed platform (101) according to any of the preceding claims, wherein the outer portions (105) are formed by or are supported by container covers, said container covers providing access to a storage container (701).

9. A bed platform (101) according to any preceding claim, wherein the bed platform (101) comprises supporting beams which run along the front, rear and outer side surfaces of the bed platform (101) relative to a longitudinal direction of the vehicle, wherein the supporting beams in the outer side surfaces of the bed platform (101) in the lateral direction relative to the longitudinal direction of the vehicle are weakened to assist the outer portions (105) to remain behind the one or more occupant seats (102) when the central portion (104) moves past the occupant seats (102).

## Patentansprüche

1. Bettplattform (101), die quer zu einem Fahrzeug hinter einem oder mehreren Insassensitzen (102) innerhalb einer Fahrzeugkabine (103) liegt, wobei die Bettplattform einen zentralen Abschnitt (104) und einen oder mehrere äußere Abschnitte (105) umfasst; wobei sich der eine oder die mehreren äußeren Abschnitte (105) hinter dem Sitz (102) in einer seitlichen Richtung des Fahrzeugs erstrecken; wobei der zentrale Abschnitt (104) einen oder mehrere geschwächte Verbinderabschnitte (202) zum Verbinden des zentralen Abschnitts (104) mit der Fahrzeugkabine (103) und/oder dem einen oder den mehreren äußeren Abschnitten (105) aufweist; wobei der eine oder die mehreren geschwächten Verbinderabschnitte (202) mit einer inneren Seitenfläche (201) des einen oder der mehreren Insassensitze (102) fluchten; wobei die geschwächten Verbinderabschnitte (202) es ermöglichen, dass der zentrale Abschnitt (104) sich an den Insassensitzen (102) vorbei nach vorne bewegt und die äußeren Abschnitte (105) durch Trennung und/oder Verformung von geschwächten Verbinderabschnitten (202) von dem zentralen Abschnitt (104) hinter den Sitzen (102) bleiben.

2. Bettplattform (101) nach Anspruch 1, wobei der zentrale Abschnitt (104) ein oder mehrere Verstärkungselemente umfasst, die dem geschwächten Verbinderabschnitt (202) in Längsrichtung des Fahrzeugs folgen; wobei die Verstärkungselemente dabei helfen, den zentralen Abschnitt (104) am Insassensitz (102) vorbei zu führen.

3. Bettplattform (101) nach einem der vorhergehenden Ansprüche, wobei der zentrale Abschnitt (104) eine Platte (904) umfasst, die sich zwischen und/oder über den geschwächten Verbinderabschnitt (202) hinaus erstreckt, um eine massive Bettplattform zu bilden.

4. Bettplattform (101) nach Anspruch 3, wobei die geschwächten Verbinderabschnitte (202) durch ein Muster von Löchern (905.2) gebildet sind, die in der Platte (904) bereitgestellt sind.

5. Bettplattform (101) nach Anspruch 4, wobei das genannte Lochmuster (905.2) Abstandshalter (1001) enthält, die eine Matratze (1002) und die Platte (904) voneinander trennen, um einen Lüftungsraum (1003) zwischen der Matratze (1002) und der Platte (904) zu bilden.

6. Bettplattform (101) nach Anspruch 5, wobei die geschwächten Verbinderabschnitte (202) durch Verlängerungsabschnitte (905) des zentralen Abschnitts (104) gebildet werden, die Verbinder (906) zum Verbinden der Verlängerungsabschnitte (905) mit den äußeren Abschnitten (105) umfassen.

7. Bettplattform (101) nach einem der vorhergehenden Ansprüche, wobei die geschwächten Verbinderabschnitte (202) zerbrechbare Verbinder (906) umfassen, die so konstruiert sind, dass sie während des Aufpralls des Fahrzeugs von den äußeren Abschnitten (105) wegbrechen.

8. Bettplattform (101) nach einem der vorhergehenden Ansprüche, wobei die äußeren Abschnitte (105) durch Behälterabdeckungen gebildet oder von diesen getragen werden, wobei die Behälterabdeckungen den Zugang zu einem Vorratsbehälter (701) bereitstellen.

9. Bettplattform (101) nach einem der vorhergehenden Ansprüche, wobei die Bettplattform (101) Stützbalken umfasst, die entlang der vorderen, hinteren und äußeren Seitenflächen der Bettplattform (101) relativ zu einer Längsrichtung des Fahrzeugs verlaufen, wobei die Stützbalken in den äußeren Seitenflächen der Bettplattform (101) in der seitlichen Richtung relativ zur Längsrichtung des Fahrzeugs geschwächt sind, um dabei zu helfen, dass die äußeren Abschnitte (105) hinter dem einen oder den mehreren Insassensitzen (102) bleiben, wenn sich der zentrale Abschnitt (104) an den Insassensitzen (102) vorbei bewegt.

## Revendications

1. Plate-forme de lit (101) posée transversalement à un véhicule derrière un ou plusieurs sièges d'occupant (102) à l'intérieur d'une cabine de véhicule (103), la plate-forme de lit comprenant une partie centrale (104) et une ou plusieurs parties extérieures (105) ; dans laquelle la ou les parties extérieures (105) s'étendent derrière le siège (102) dans une direction latérale du véhicule ; dans laquelle la partie centrale (104) présente une ou plusieurs parties de connexion affaiblies (202) pour connecter ladite partie centrale (104) à la cabine de véhicule (103) et/ou à la ou les parties extérieures (105) ; dans laquelle la ou les parties de connecteur affaiblies (202) s'alignent sur une surface latérale intérieure (201) des un ou plusieurs sièges d'occupant (102) ; dans laquelle lesdites parties de connecteur affaiblies (202) permettent à la partie centrale (104) de se déplacer vers l'avant au-delà desdits sièges d'occupant (102) et auxdites parties extérieures (105) de rester derrière lesdits sièges (102) par déconnexion et/ou déformation des parties de connecteur affaiblies (202) à partir de la partie centrale (104).

2. Plate-forme de lit (101) selon la revendication 1, dans laquelle la partie centrale (104) comprend un ou plusieurs éléments de renfort qui suivent ladite partie de connecteur affaiblie (202) dans la direction longitudinale du véhicule ; lesdits éléments de renfort aidant à guider la partie centrale (104) au-delà du siège de l'occupant (102).

3. Plate-forme de lit (101) selon l'une quelconque des revendications précédentes, dans laquelle la partie centrale (104) comprend un panneau (904) s'étendant entre et/ou au-delà de la partie de connecteur affaiblie (202) pour former une plate-forme de lit solide.

4. Plate-forme de lit (101) selon la revendication 3, dans laquelle les parties de connexion affaiblies (202) sont formées par un motif à trous (905.2) ménagé dans le panneau (904).

5. Plate-forme de lit (101) selon la revendication 4, dans laquelle ledit motif à trous (905.2) contient des entretoises (1001) qui espacent un matelas (1002) et le panneau (904) pour former un espace de ventilation (1003) entre le matelas (1002) et le panneau (904).

6. Plate-forme de lit (101) selon la revendication 5, dans laquelle les parties de connecteur affaiblies (202) sont formées par des parties d'extension (905) de la partie centrale (104) comprenant des connecteurs (906) pour relier les parties d'extension (905) aux parties extérieures (105).

7. Plate-forme de lit (101) selon l'une quelconque des revendications précédentes, dans laquelle les parties de connecteur affaiblies (202) comprennent des connecteurs cassables (906) conçus pour se détacher des parties extérieures (105) lors de la collision du véhicule.

8. Plate-forme de lit (101) selon l'une quelconque des revendications précédentes, dans laquelle les parties extérieures (105) sont formées ou soutenues par des couvercles de conteneurs, lesdits couvercles de conteneurs donnant accès à un conteneur de stockage (701).

9. Plate-forme de lit (101) selon l'une quelconque des revendications précédentes, dans laquelle la plate-forme de lit (101) comprend des poutres de soutien qui s'étendent le long des surfaces avant, arrière et latérales extérieures de la plate-forme de lit (101) par rapport à une direction longitudinale du véhicule, dans laquelle les poutres de soutien dans les surfaces latérales extérieures de la plate-forme de lit (101) dans la direction latérale par rapport à la direction longitudinale du véhicule sont affaiblies pour aider les parties extérieures (105) à rester derrière un ou plusieurs sièges d'occupant (102) lorsque la partie centrale (104) se déplace au-delà des sièges d'occupant (102).
